# FASCICULE DE BREVET EUROPEEN

(11) **EP 3 095 684 B1**
(45) Date de publication et mention de la délivrance du brevet: **17.01.2018**
(21) Numéro de dépôt: 16170391.3
(22) Date de dépôt: 19.05.2016
(51) Int. Cl.: B62M 9/125

(54) **PATTE DE DERAILLEUR**
LASCHE EINER KETTENSCHALTUNG
DERAILLEUR TAB

(30) Priorité: 21.05.2015 FR 1554541
(43) Date de publication de la demande: 23.11.2016
(73) Titulaire: Cycles Lapierre, 21000 Dijon (FR)
(72) Inventeur: CALTAGIRONE, Geoffrey, 21160 Marsannay la Côte (FR)
(74) Mandataire: Gevers SA

(56) Documents cités:
- EP-A1- 2 716 534
- US-A1- 2008 197 601
- US-A1- 2013 241 175

## Description

### Domaine technique

La présente invention concerne une patte de dérailleur d'un vélo. Plus particulièrement, la présente invention concerne une patte de dérailleur d'un vélo comportant des surfaces d'appui facilitant la mise en place du moyeu d'une roue de vélo entre les pattes d'une fourche ou du bras arrière d'un cadre de vélo.

### Etat de la technique

Dans le domaine du vélo, il est bien connu des systèmes de fixation de la roue comportant une attache rapide solidaire des extrémités du moyeu de la roue, lesdites extrémités du moyeu étant aptes à être insérées dans les pattes en forme générale de U s'étendant à l'extrémité de la fourche ou du bras arrière du vélo.

Toutefois, l'axe du moyeu de la roue présente un diamètre légèrement inférieur à celui des pattes de sorte que le jeu entre l'axe et les pattes peut entraîner un manque de stabilité dans le montage de la roue par rapport à la fourche ou le cadre. Ce manque de stabilité peut être dû aux contraintes appliquées lors de l'utilisation du vélo soit au mauvais montage de l'axe du moyeu dans les pattes.

Afin de remédier à cet inconvénient, le document WO 2005/051753 décrit un ensemble d'essieu qui relie un ensemble de roue à un châssis de véhicule. Cet ensemble d'essieu comprend un corps tubulaire qui présente des premières et secondes extrémités pouvant être reliées au châssis de véhicule et des fentes à extrémité ouverte placées à proximité d'au moins une des premières et secondes extrémités du corps tubulaire. Un ensemble suiveur est conçu pour déformer en direction radiale une des premières et secondes extrémités, afin de la bloquer contre le châssis de véhicule en réponse à un déplacement de l'ensemble suiveur induit par un actionneur de levier. Cette configuration permet une connexion rigide entre l'ensemble d'essieu et le châssis de véhicule à la fois dans la direction linéaire et dans la direction radiale.

Toutefois, ce type de système présente un risque élevé d'être mal monté, notamment en vissant avec un couple inadapté ou en appliquant un serrage insuffisant. De plus, l'ensemble n'est pas suffisamment stable notamment pour une utilisation professionnelle ou semi-professionnelle. Document US 2013/241175 A1 montre le préambule de la revendication 1. D'autres pattes de dérailleur sont décrites dans le brevet européen EP 0 421 257 et le brevet américain US 5,082,303 notamment.

Afin de remédier aux inconvénients des pattes de dérailleur de l'art antérieur, le document EP 2 158 120 décrit un dispositif destiné à la mise en place d'un moyeu de roue pour une bicyclette, comprenant un oeillet de couplage et une première extrémité d'entraxe. Un creux est prévu sur la première extrémité d'entraxe pour recevoir les extrémités d'un moyeu de roue. L'oeillet de couplage est agencé de telle sorte que la surface latérale du creux se prolonge essentiellement en continu par une première surface de guidage de l'oeillet de couplage. Par ailleurs, le creux présente une surface d'appui contre laquelle s'appuie l'extrémité du moyeu de la roue et l'oeillet de couplage est agencé de telle manière que la surface d'appui du creux se prolonge essentiellement en continu par une seconde surface de guidage de l'oeillet de couplage.

Ce type de dispositif présente néanmoins de ne pas permettre un montage aisé et rapide du moyeu entre les pattes.

### Divulguation de l'invention

L'un des buts de l'invention est donc de remédier à ces inconvénients en proposant une patte de dérailleur de conception simple et peu onéreuse, facilitant la mise en place du moyeu de la roue.

A cet effet et conformément à l'invention, il est proposé une patte de dérailleur pour la mise en place d'un moyeu d'une roue d'un vélo ou similaire comprenant un corps comportant au moins un premier trou apte à recevoir l'extrémité du moyeu d'une roue et un second trou formant un oeillet de couplage, ledit corps comportant au niveau du premier trou un évidement débouchant sur l'un des côté du corps et formant une paroi de fond perpendiculaire à l'axe du premier trou et une paroi latérale s'étendant parallèlement à l'axe du trou, ladite patte de dérailleur est remarquable en ce que la paroi de fond comporte deux zones, une première zone entourant le premier trou et dans laquelle la surface de fond s'étend perpendiculairement à l'axe dudit premier trou et une seconde zone s'étendant depuis le premier trou en direction du second trou et dans laquelle la surface du fond est inclinée par rapport à la surface de fond de la première zone.

De préférence, la surface de fond de la seconde zone forme un angle compris entre 2 et 10° avec la surface de fond de la première zone.

Par ailleurs, le corps présente une forme triangulaire et, de préférence, une forme de triangle rectangle, l'évidement débouchant sur le grand côté du triangle.

De plus, la paroi latérale de l'évidement comporte, à la périphérie de la seconde zone, une partie inférieure dont la surface s'étend parallèlement à l'axe du premier trou et une partie supérieure dont la surface forme un angle avec la partie inférieure en s'évasant vers l'extérieur.

Ladite partie supérieure de la paroi latérale forme de préférence un angle compris entre 2 et 10° avec la partie inférieure de ladite paroi latérale.

De préférence, au niveau de l'extrémité libre de ladite paroi latérale 7, au niveau de la seconde zone 6b, la partie inférieure s'étend sur un tiers de la hauteur totale de la paroi latérale et la partie supérieure s'étend sur deux tiers de la hauteur totale de la paroi latérale.

Par ailleurs, la paroi latérale de l'évidement forme, à la périphérie de la première zone, un angle avec l'axe du premier trou.

De préférence, la paroi latérale forme, à la périphérie de la première zone, un angle compris entre 2 et 10° avec l'axe du premier trou.

Accessoirement, le corps est constitué de deux segments fixés de façon amovible, un premier segment comportant le premier trou et un second segment comportant le second trou.

### Brève description des dessins

D'autres avantages et caractéristiques ressortiront mieux de la description qui va suivre, d'une unique variante d'exécution, donnée à titre d'exemple non limitatif, de la patte de dérailleur suivant l'invention, à partir des dessins annexés sur lesquels :
- la figure 1 est une vue en perspective de la patte de dérailleur conforme à l'invention,
- la figure 2 est une vue de face de la patte de dérailleur conforme à l'invention,
- la figure 3 est une vue en coupe longitudinale de la patte de dérailleur conforme à l'invention.

### Mode de réalisation de l'invention

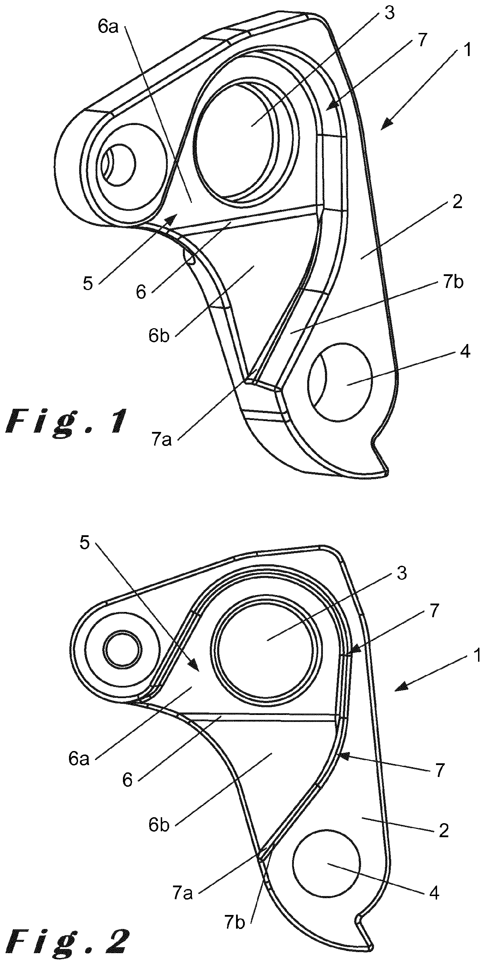

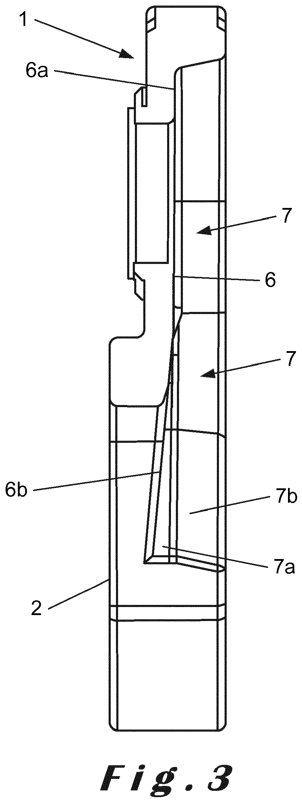

En référence aux figures 1 à 3, la patte de dérailleur 1 pour la mise en place d'un moyeu d'une roue d'un vélo ou similaire suivant l'invention comprend un corps 2 comportant un premier trou 3 apte à recevoir l'extrémité du moyeu d'une roue et un second trou 4 formant un oeillet de couplage, ledit corps 2 comportant au niveau du premier trou 3 un évidement 5 débouchant sur l'un des côté du corps 2 et formant une paroi de fond 6 sensiblement perpendiculaire à l'axe du premier trou 3 et une paroi latérale 7 s'étendant parallèlement à l'axe du premier trou 3. La paroi de fond 6 comporte deux zones, une première zone 6a entourant le premier trou 3 et dans laquelle la surface de fond 6 s'étend perpendiculairement à l'axe dudit premier trou 3 et une seconde zone 6b s'étendant depuis le premier trou 3 en direction du second trou 4 et dans laquelle la surface du fond 6 est inclinée par rapport à la surface de fond de la première zone 6a afin de former une rampe qui guide l'extrémité du moyeu de la roue jusqu'au premier trou 3.

De préférence, la surface de fond de la seconde zone 6b forme un angle compris entre 2 et 10° avec la surface de fond de la première zone 6a.

Par ailleurs, le corps 2 présente une forme triangulaire et, de préférence, une forme de triangle rectangle, l'évidement 5 débouchant sur le grand côté du triangle.

De plus, de manière avantageuse, la paroi latérale 7 de l'évidement 5 comporte, à la périphérie de la seconde zone, une partie inférieure 7a dont la surface s'étend parallèlement à l'axe du premier trou 3 et une partie supérieure 7b dont la surface forme un angle avec la partie inférieure 7a en s'évasant vers l'extérieur. Ladite partie supérieure 7b de la paroi latérale 7 forme un angle compris entre 2 et 10° avec la partie inférieure 7a de ladite paroi latérale 7. De plus, au niveau de l'extrémité libre de ladite paroi latérale 7, au niveau de la seconde zone 6b, la partie inférieure 7a s'étend sur un tiers de la hauteur totale de la paroi latérale 7 et la partie supérieure 7b s'étend sur deux tiers de la hauteur totale de la paroi latérale 7. Ainsi, à la jonction entre la seconde zone 6b et la première zone de la paroi de fond 6, la partie inférieure 7a présente une hauteur nulle et la hauteur de la partie inférieure 7a croît jusqu'à l'extrémité libre de la paroi latérale 7, au niveau de la seconde zone 6b.

Ladite paroi latérale 7 de l'évidement 5 forme, à la périphérie de la première zone 6a, un angle avec l'axe du premier trou 3, ledit angle étant compris entre 2 et 10° avec l'axe du premier trou 3. On notera que l'inclinaison de la partie supérieure 7b de la paroi latérale 7, au niveau de la seconde zone 6b, et l'inclinaison de la paroi latérale 7 au niveau de la première zone 6a permettent de guider l'extrémité du moyeu de la roue jusqu'à la paroi de fond 6. Ainsi, la mise en place du moyeu de la roue est particulièrement rapide et aisée, l'extrémité du moyeu étant guidée axialement et radialement.

Accessoirement, le corps 2 pourra être constitué de deux segments fixés de façon amovible, un premier segment comportant le premier trou 3 et un second segment comportant le second trou 4. Un tel corps 2 en deux segments pourra être réalisé conformément aux enseignements du document EP 2 158 120 par exemple.

Enfin, il est bien évident que les exemples que l'on vient de donner ne sont que des illustrations particulières en aucun cas limitatives quant aux domaines d'application de l'invention.

## Revendications

1. Patte de dérailleur (1) pour la mise en place d'un moyeu d'une roue d'un vélo ou similaire comprenant un corps (2) comportant au moins un premier trou (3) apte à recevoir l'extrémité du moyeu d'une roue et un second trou (4) formant un oeillet de couplage, ledit corps (2) comportant au niveau du premier trou (3) un évidement débouchant sur l'un des côté du corps (2) et formant une paroi de fond (6) perpendiculaire à l'axe du premier trou (3) et une paroi latérale (7) s'étendant parallèlement à l'axe du trou (3), ladite patte de dérailleur (1) étant ***caractérisée* en ce que** la paroi de fond (6) comporte deux zones (6a,6b), une première zone (6a) entourant le premier trou (3) et dans laquelle la surface de fond (6) s'étend perpendiculairement à l'axe dudit premier trou (3) et une seconde zone (6b) s'étendant depuis le premier trou (3) en direction du second trou (4) et dans laquelle la surface du fond (6) est inclinée par rapport à la surface de fond (6) de la première zone (6a).

2. Patte de dérailleur suivant la revendication 1 ***caractérisée* en ce que** la surface de fond (6) de la seconde zone (6b) forme un angle compris entre 2 et 10° avec la surface de fond (6) de la première zone (6a).

3. Patte de dérailleur suivant l'une quelconque des revendications 1 ou 2 ***caractérisée* en ce que** le corps (2) présente une forme triangulaire.

4. Patte de dérailleur suivant la revendication 3 ***caractérisée* en ce que** le corps (2) présente une forme de triangle rectangle, l'évidement (5) débouchant sur le grand côté du triangle.

5. Patte de dérailleur suivant l'une quelconque des revendications 1 à 4 ***caractérisée* en ce que** la paroi latérale (7) de l'évidement (5) comporte, à la périphérie de la seconde zone (6b), une partie inférieure (7a) dont la surface s'étend parallèlement à l'axe du premier trou (3) et une partie supérieure (7b) dont la surface forme un angle avec la partie inférieure (7a) en s'évasant vers l'extérieur.

6. Patte de dérailleur suivant la revendication 5 ***caractérisée* en ce que** la partie supérieure (7b) de la paroi latérale (7) forme un angle compris entre 2 et 10° avec la partie inférieure (7a) de ladite paroi latérale (7).

7. Patte de dérailleur suivant l'une quelconque des revendications 5 ou 6 ***caractérisée* en ce que**, au niveau de l'extrémité libre de ladite paroi latérale (7), au niveau de la seconde zone (6b), la partie inférieure (7a) s'étend sur un tiers de la hauteur totale de la paroi latérale (7) et la partie supérieure (7b) s'étend sur deux tiers de la hauteur totale de la paroi latérale (7).

8. Patte de dérailleur suivant l'une quelconque des revendications 1 à 4 ***caractérisée* en ce que** la paroi latérale (7) de l'évidement (5) forme, à la périphérie de la première zone (6a), un angle avec l'axe du premier trou (3).

9. Patte de dérailleur suivant la revendication 8 ***caractérisée* en ce que** la paroi latérale (7) forme, à la périphérie de la première zone (6a), un angle compris entre 2 et 10° avec l'axe du premier trou (3).

10. Patte de dérailleur suivant l'une quelconque des revendications 1 à 9 ***caractérisée* en ce que** le corps (2) est constitué de deux segments fixés de façon amovible, un premier segment comportant le premier trou (3) et un second segment comportant le second trou (4).

## Patentansprüche

1. Lasche einer Kettenschaltung (1) für die Platzierung einer Nabe eines Rads eines Fahrrads oder ähnliches, umfassend einen Körper (2), aufweisend mindestens ein erstes Loch (3), das imstande ist, das Ende der Nabe eines Rads aufzunehmen, und ein zweites Loch (4), das eine Kopplungsöse bildet, wobei der Körper (2) im Bereich des ersten Lochs (3) eine Aussparung aufweist, die auf einer der Seiten des Körpers (2) ausmündet und eine zur Achse des erstes Lochs (3) senkrechte Bodenwand (6) und eine Seitenwand (7), die sich parallel zur Achse des Lochs (3) erstreckt, bildet, wobei die Lasche einer Kettenschaltung (1) **dadurch gekennzeichnet ist, dass** die Bodenwand (6) zwei Bereiche (6a, 6b) aufweist, einen ersten Bereich (6a), der das erste Loch (3) umgibt und in dem sich die Bodenfläche (6) senkrecht zur Achse des ersten Lochs (3) erstreckt, und einen zweiten Bereich (6b), der sich ab dem ersten Loch (3) in Richtung des zweiten Lochs (4) erstreckt und in dem die Bodenfläche (6) in Bezug zur Bodenfläche (6) des ersten Bereichs (6a) geneigt ist.

2. Lasche einer Kettenschaltung nach Anspruch 1, **dadurch gekennzeichnet, dass** die Bodenfläche (6) des zweiten Bereichs (6b) einen Winkel zwischen 2 und 10° inklusive mit der Bodenfläche (6) des ersten Bereichs (6a) bildet.

3. Lasche einer Kettenschaltung nach einem der Ansprüche 1 oder 2, **dadurch gekennzeichnet, dass** der Körper (2) eine dreieckige Form aufweist.

4. Lasche einer Kettenschaltung nach Anspruch 3, **dadurch gekennzeichnet, dass** der Körper (2) eine Form eines rechtwinkligen Dreiecks aufweist, wobei die Aussparung (5) auf der großen Seite des Dreiecks ausmündet.

5. Lasche einer Kettenschaltung nach einem der Ansprüche 1 bis 4, **dadurch gekennzeichnet, dass** die Seitenwand (7) der Aussparung (5) auf dem Umfang des zweiten Bereichs (6b) einen unteren Teil (7a) aufweist, dessen Fläche sich parallel zur Achse des erstes Lochs (3) erstreckt, und einen oberen Teil (7b), dessen Fläche durch Erweiterung nach außen einen Winkel mit dem unteren Teil (7a) bildet.

6. Lasche einer Kettenschaltung nach Anspruch 5, **dadurch gekennzeichnet, dass** der obere Teil (7b) der Seitenwand (7) mit dem unteren Teil (7a) der Seitenwand (7) einen Winkel zwischen 2 und 10° inklusive bildet.

7. Lasche einer Kettenschaltung nach einem der Ansprüche 5 oder 6, **dadurch gekennzeichnet, dass** sich im Bereich des freien Endes der Seitenwand (7) im Bereich des zweiten Bereichs (6b) der untere Teil (7a) über ein Drittel der gesamten Höhe der Seitenwand (7) erstreckt und sich der obere Teil (7b) über zwei Drittel der gesamten Höhe der Seitenwand (7) erstreckt.

8. Lasche einer Kettenschaltung nach einem der Ansprüche 1 bis 4, **dadurch gekennzeichnet, dass** die Seitenwand (7) der Aussparung (5) auf dem Umfang des ersten Bereichs (6a) einen Winkel mit der Achse des ersten Lochs (3) bildet.

9. Lasche einer Kettenschaltung nach Anspruch 8, **dadurch gekennzeichnet, dass** die Seitenwand (7) auf dem Umfang des ersten Bereichs (6a) einen Winkel zwischen 2 und 10° inklusive mit der Achse des ersten Lochs (3) bildet.

10. Lasche einer Kettenschaltung nach einem der Ansprüche 1 bis 9, **dadurch gekennzeichnet, dass** der Körper (2) von zwei Segmenten gebildet ist, die lösbar befestigt sind, wobei ein erstes Segment das erste Loch (3) und ein zweites Segment das zweite Loch (4) aufweist.

## Claims

1. A derailleur hanger (1) for placing a hub of a wheel of a bicycle or the like comprising a body (2) including at least a first hole (3) able to receive the end of the hub of a wheel and a second hole (4) forming a coupling eyelet, said body (2) including, at the first hole (3), a recess emerging on one of the sides of the body (2) and forming a bottom wall (6) perpendicular to the axis of the first hole (3) and a side wall (7) extending parallel to the axis of the hole (3), said derailleur hanger (1) being ***characterized* in that** the bottom wall (6) includes two zones (6a, 6b), a first zone (6a) surrounding the first hole (3) and in which the bottom surface (6) extends perpendicular to the axis of said hole (3) and a second zone (6b) extending from the first hole (3) toward the second hole (4) and in which the surface of the bottom (6) is inclined relative to the bottom surface (6) of the first zone (6a).

2. The derailleur hanger according to claim 1, ***characterized* in that** the bottom surface (6) of the second zone (6b) forms an angle comprised between 2 and 10° with the bottom surface (6) of the first zone (6a).

3. The derailleur hanger according to any one of claims 1 or 2, ***characterized* in that** the body (2) has a triangular shape.

4. The derailleur hanger according to claim 3, ***characterized* in that** the body (2) is in the shape of a right-angled triangle, the recess (5) emerging on the large side of the triangle.

5. The derailleur hanger according to any one of claims 1 to 4, ***characterized* in that** the side wall (7) of the recess (5) includes, at the periphery of the second zone (6b), a lower part (7a) whose surface extends parallel to the axis of the first hole (3) and an upper part (7b) whose surface forms an angle with the lower part (7a) while flaring outward.

6. The derailleur hanger according to claim 5, ***characterized* in that** the upper part (7b) of the side wall (7) forms an angle comprised between 2 and 10° with the lower part (7a) of said side wall (7).

7. The derailleur hanger according to any one of claims 5 or 6, ***characterized* in that**, at the free end of said side wall (7), at the second zone (6b), the lower part (7a) extends over one third of the total height of the side wall (7) and the upper part (7b) extends over two thirds of the total height of the side wall (7).

8. The derailleur hanger according to any one of claims 1 to 4, ***characterized* in that** the side wall (7) of the recess (5) forms, at the periphery of the first zone (6a), an angle with the axis of the first hole (3).

9. The derailleur hanger according to claim 8, ***characterized* in that** the side wall (7) forms, at the periphery of the first zone (6a), an angle comprised between 2 and 10° with the axis of the first hole (3).

10. The derailleur hanger according to any one of claims 1 to 9, ***characterized* in that** the body (2) is made up of two segments fastened removably, a first segment including the first hole (3) and a second segment including the second hole (4).
